# EUROPÄISCHE PATENTSCHRIFT

(11) **EP 1 371 835 B1**
(45) Veröffentlichungstag und Bekanntmachung des Hinweises auf die Patenterteilung: **23.04.2008**
(21) Anmeldenummer: 03012002.6
(22) Anmeldetag: 28.05.2003
(51) Int. Cl.: B60W 30/18, B60W 10/06, B60W 10/10

(54) **Elektronische Rechnereinheit zur Bestimmung eines Soll-Motormoments für eine Brennkraftmaschinen-Steuerung**
Electronic control unit for setting a target engine torque in an engine control system
Unité électronique pour le calcul d'une valeur cible du couple moteur pendant la régulation d'un moteur à combustion

(30) Priorität: 13.06.2002 DE 10226142
(43) Veröffentlichungstag der Anmeldung: 17.12.2003
(73) Patentinhaber: Bayerische Motoren Werke Aktiengesellschaft, 80809 München (DE)
(72) Erfinder: Krämer, Gerd, 82065 Baierbrunn (DE); Croci, Alberto, 80634 München (DE)

(56) Entgegenhaltungen:
- WO-A-92/09448
- DE-A1- 4 235 881
- DE-A1- 19 644 881

## Beschreibung

Die Erfindung betrifft eine elektronische Rechnereinheit zur Bestimmung eines Soll-Motormoments für eine Brennkraftmaschinen-Steuerung nach dem Oberbegriff des Patentanspruchs 1.

Beispielsweise aus der nicht vorveröffentlichten DE 101 17 162 ist eine kombinierte Automatikgetriebe-/Brennkraftmaschinen-Steuerung für Kraftfahrzeuge bekannt, durch die abhängig von einem Fahrerwunschsignal ein Soll-Motormoment bestimmt wird.

In elektronischen Steuergeräten für Brennkraftmaschinen-Steuerungen ist üblicherweise eine Momentenstruktur programmiert, die aus einem Fahrerwunschsignal und ggf. aus weiteren Betriebssignalen ein entsprechendes Soll-Motormoment berechnet. Voraussetzung hierfür ist ein Kraftfahrzeug, bei dem das Fahrpedal nicht direkt mit dem Leistungssteuerorgan der Brennkraftmaschine, z. B. der Drosselklappe bei Ottomotoren, gekoppelt ist. Das Soll-Motormoment wird mittels der Ausgangssignale des Brennkraftmaschinen-Steuergeräts zu den entsprechenden Aktoren (Einspritzventile, Drosselklappe, Kraftstoffpumpe...usw.) eingestellt. Das Fahrerwunschsignal ist z. B. das Sensorsignal zur Erfassung der Fahrpedalstellung.

Noch genauer als die Vorgabe eines Soll-Motormoments für die Umsetzung des Fahrerwunschsignals bzw. des Fahrerwunsches ist die Vorgabe eines Soll-Abtriebsmoments bzw. einer Zugkraft an den angetriebenen Rädern oder an der Antriebsachse. Bisher konnte das zugehörige Soll-Motormoment aus einem Soll-Abtriebsmoment jedoch nur dann ermittelt werden, wenn insbesondere die durch das Getriebe aktuell eingestellte Übersetzung bekannt war. Während des Schaltvorganges und vor allem während des Einkuppelvorganges ist die Übersetzung nach dem Schaltvorgang jedoch nur bei Automatikgetrieben oder automatisierten Handschaltgetrieben mit elektronischen Steuergeräten vorher bekannt. Bei manuellen Handschaltgetrieben kann die Übersetzung erst dann berechnet werden wenn die Kupplung vollständig geschlossen ist. Da der vom Fahrer manuell eingelegte Gang nicht vorher bekannt ist, konnte während des Einkuppelvorganges kein sinnvolles Soll-Abtriebsmoment vorgegeben werden. DE-A-4 235 881 zeigt die Merkmale des Oberbegriffs des unabhängigen Anspruchs 1.

Es ist Aufgabe der Erfindung, insbesondere für Kraftfahrzeuge mit nicht elektronisch automatisierten Handschaltgetrieben eine im Hinblick auf die optimale Umsetzung des Fahrerwunsches verbesserte Momentenstruktur zu schaffen.

Diese Aufgabe wird durch die Merkmale des Patentanspruchs 1 gelöst. Die Gegenstände der abhängigen Ansprüche sind vorteilhafte Weiterbildungen der Erfindung.

Erfindungsgemäß werden bei einer elektronischen Rechnereinheit, die beispielsweise in einem elektronischen Motor-Steuergerät integriert ist, zur Bestimmung eines Soll-Motormoments für eine Brennkraftmaschinen-Steuerung in Kraftfahrzeugen die aktuelle Abtriebsdrehzahl, die aktuelle Motordrehzahl und ein Fahrerwunschsignal als Eingangssignale erfasst. Unabhängig von der Stellung der Kupplung zwischen Brennkraftmaschine und Getriebe wird aus der aktuellen Abtriebsdrehzahl und der aktuellen Motordrehzahl eine aktuelle Übersetzung ermittelt. Aus dem Fahrerwunschsignal wird ein Soll-Abtriebsmoment ermittelt. Das Soll-Motormoment wird ohne Berücksichtigung der Stellung der Kupplung aus der aktuellen Übersetzung und dem Soll-Abtriebsmoment berechnet.

Der Erfindung liegt die durch Versuche herausgefundene überraschende Erkenntnis zugrunde, dass im Gegensatz zu den üblichen Ansichten nicht eine vorgegebene Übersetzung vor oder nach einem Einkuppeln für eine komfortabel Steuerung des Motormoments notwendig ist. Vielmehr führt eine Motormoment-Steuerung abhängig von der tatsächlichen Übersetzung zwischen Brennkraftmaschine und Getriebe, selbst bei geöffneter Kupplung, zu vorteilhaften Ergebnissen im Hinblick auf die Erfüllung des Fahrerwunsches. Daher ist die Erfindung nicht auf manuelle Handschaltgetriebe beschränkt, sondern kann auch z. B. auf Automatik-Stufengetriebe, auf kontinuierlich verstellbare Automatik-Getriebe (CVT) und auf automatisierte Handschaltgetriebe auch für die Fälle angewandt werden, wenn die entsprechenden Kupplungen nicht (ganz) geschlossen sind.

Ist die Kupplung zwischen Brennkraftmaschine und Getriebe geöffnet, stellt sich insbesondere bei Stufengetrieben eine Übersetzung ein, die durch einen einlegbaren Gang nicht möglich ist. Diese Tatsache wird erfindungsgemäß ignoriert. Die erfindungsgemäße Momentensteuerung kennt somit keine Kraftschlussunterbrechung. Ein Stufengetriebe wird somit wie ein CVT behandelt. Hierdurch wird insbesondere bei Stufengetrieben bestmöglicher Komfort bei der jeweils angeforderter Leistung erreicht.

In einer vorteilhaften Weiterbildung der Erfindung wird die unabhängig von der Stellung der Kupplung ermittelte aktuelle Übersetzung durch eine vorgegebene minimal zulässige Übersetzung und eine vorgegebene maximal zulässige Übersetzung in Form einer aktuellen limitierten Übersetzung begrenzt. Zur Begrenzung wird vorteilhafterweise die minimal zulässige Übersetzung durch die mittels des Getriebes einstellbare minimal mögliche Übersetzung (z. B. letzter Gang beim Stufengetriebe) vorgegeben. Die maximal zulässige Übersetzung wird durch die mittels des Getriebes einstellbare maximal mögliche Übersetzung (z.B. erster Gang beim Stufengetriebe) vorgegeben. Dadurch wird insbesondere verhindert, dass durch eine zu hohe unbegrenzte aktuelle Übersetzung, die z. B. bei geöffneter Kupplung im Stillstand mit hoher Leerlaufdrehzahl erreicht werden würde, das Soll-Motormoment so klein wird, dass ein Anfahren nicht mehr möglich ist. Eine zu niedrige unbegrenzte aktuelle Übersetzung könnte zu einem unerwünschten "Drehzahlanstieg" der Brennkraftmaschine führen.

In einer weiteren Ausgestaltung der Erfindung ist das aus dem Fahrerwunschsignal ermittelte Soll-Abtriebsmoment durch das minimal mögliche Abtriebsmoment bzw. das maximal mögliche Abtriebsmoment begrenzt. Vorzugsweise wird das Fahrerwunschsignal bzw. der Fahrerwunsch von 0% bis 100% bezogen, auf den Bereich zwischen dem minimal möglichen und dem maximal möglichen Abtriebsmoment skaliert. Dadurch wird der Fahrerwunsch optimal auf die von der Brennkraftmaschine lieferbare Leistung angepasst.

In der Zeichnung sind Ausführungsbeispiele der Erfindung dargestellt. Es zeigt
- Fig. 1: ein Blockschaltbild zur schematischen Darstellung der Funktionen in der erfindungsgemäßen Rechnereinheit,
- Fig. 2: ein Diagramm zur Darstellung der gewünschten und möglichen Zugkraft abhängig von der Fahrzeuggeschwindigkeit und der Übersetzung und
- Fig. 3: die Wirkung der Erfindung auch bei geöffneter Kupplung.

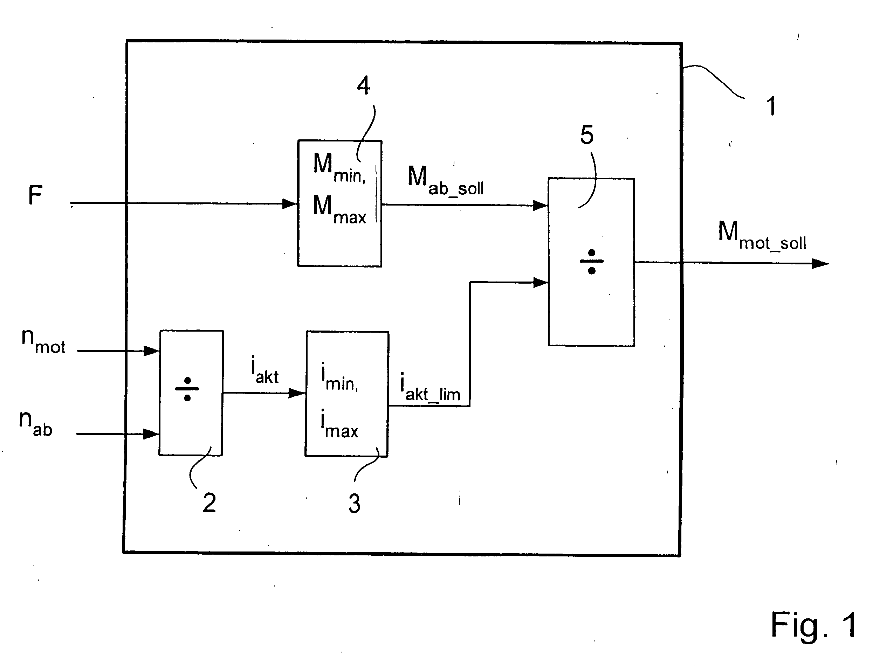

In Fig. 1 ist die erfindungsgemäße elektronische Rechnereinheit 1 dargestellt, die als Eingangssignale die aktuelle Abtriebsdrehzahl n_{ab}, die aktuelle Motordrehzahl nₘₒₜ und den Fahrerwunsch F erhält. Die Rechnereinheit 1 ist vorzugsweise in einem ohnehin vorhandenen elektronischen Motorsteuergerät integriert. Die drei hier dargestellten Eingangssignale sind übliche Eingangssignale bekannter elektronischer Motorsteuergeräte. Eine Signalverbindung zu einem elektronischen Getriebesteuergerät ist bei der vorliegenden Erfindung nicht notwendig. Sollte die aktuelle Abtriebsdrehzahl n_{ab} nicht direkt vorliegen, kann diese bei Kenntnis der Hinterachsübersetzung (falls die Hinterachse die angetriebene Achse ist) auch aus dem Fahrgeschwindigkeitssignal ermittelt werden.

Im Verhältnisbildungsblock 2 der Rechnereinheit 1 wird das Verhältnis der aktuellen Motordrehzahl nₘₒₜ zur aktuellen Abtriebsdrehzahl n_{ab} gebildet, um somit die aktuelle Übersetzung iₐₖₜ zu erhalten. Diese (zunächst) unbegrenzte aktuelle Übersetzung iₐₖₜ ist Eingangssignal des Begrenzungsblocks 3, in dem geprüft wird, ob die aktuelle Übersetzung iₐₖₜ innerhalb eines Bereichs zwischen einer vorgegebenen minimal zulässigen Übersetzung iₘᵢₙ und einer vorgegebenen maximal zulässigen Übersetzung iₘₐₓ liegt. Wird die Erfindung beispielsweise auf ein 5-Gang-Handschaltgetriebe angewendet, würde vorzugsweise als minimal zulässige Übersetzung iₘᵢₙ die dem fünften Gang zugeordnete Übersetzung und als maximal zulässige Übersetzung iₘₐₓ die dem ersten Gang zugeordnete Übersetzung vorgegeben werden. Würde also die aktuelle Übersetzung iₐₖₜ unterhalb des Bereichs zwischen iₘᵢₙ und iₘₐₓ liegen, würde als aktuelle limitierte Übersetzung i_{akt_lim} die minimal zulässige Übersetzung gewählt werden. Würde die aktuelle Übersetzung iₐₖₜ oberhalb des Bereichs zwischen iₘᵢₙ und iₘₐₓ liegen, würde als aktuelle limitierte Übersetzung iakt lim die maximal zulässige Übersetzung iₘₐₓ definiert werden. Liegt die aktuelle Übersetzung iₐₖₜ innerhalb des Bereichs zwischen iₘᵢₙ und iₘₐₓ, entspricht die aktuelle limitierte Übersetzung i_{akt_lim} der tatsächlichen aktuellen Übersetzung ⁱakt.

Die aktuelle, ggf. limitierte Übersetzung i_{akt_lim} ist Eingangssignal des Verhältnisbildungsblockes 5. Das zweite Eingangssignal des Verhältnisbildungsblockes 5 ist das Soll-Abtriebsmoment M_{ab_soll}. Das Soll-Abtriebsmoment M_{ab_soll} wird aus dem Fahrerwunschsignal F, das vorzugsweise einem Zugkraftwunsch an den Antriebsrädern bzw. an der Antriebsachse entspricht, gebildet. Der Fahrerwunsch in Form der Zugkraft F wird vorzugsweise von 0% bis 100% bezogen auf den Bereich zwischen einem minimal möglichen Abtriebsmoment Mₘᵢₙ und einem maximal möglichen Abtriebsmoment Mₘₐₓ skaliert.

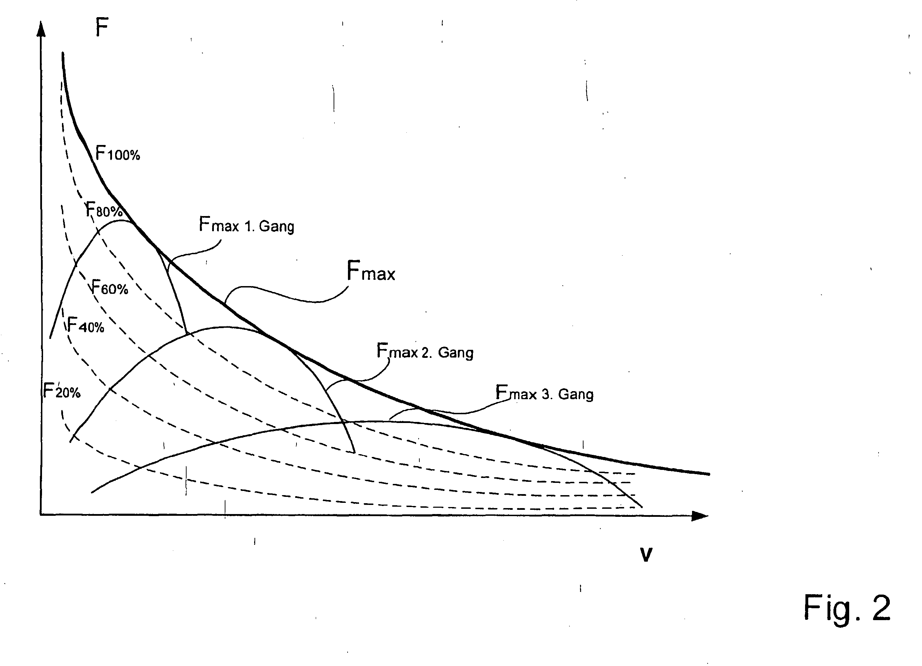

In Fig. 2 ist gestrichelt der Fahrerwunsch F über der Fahrzeuggeschwindigkeit v in Form einer Zugkraft in % (F_{20%}, F_{40%,} F_{60%}, F_{80%}, F₁₀₀%) bezogen auf eine maximal mögliche Zugkraft Fₘₐₓ (fette durchgezogene Linie) dargestellt. Ergänzend sind beispielsweise auch die Linien der maximal möglichen Zugkraft eingetragen (dünne durchgezogene Linien: F_{max 1. Gang}, F_{max 2. Gang}, F_{max 3. Gang}) die jeweils im 1. Gang, im 2. Gang und im 3. Gang erreicht werden könnten. Die Linie der maximal möglichen Zugkraft Fₘₐₓ ergibt sich theoretisch, wenn für jede Fahrzeuggeschwindigkeit v eine optimale Übersetzung angenommen wird. In Fig. 2 ist lediglich der Zugbetrieb dargestellt, entsprechende Linien ergeben sich jedoch auch für den Schubbetrieb im Hinblick auf eine minimal mögliche Zugkraft (Fₘᵢₙ). Aus der maximal möglichen Zugkraft Fₘₐₓ unter Annahme einer jeweils optimalen Übersetzung ergibt sich theoretisch das maximal mögliche Abtriebsmoment Mₘₐₓ. Entsprechendes gilt im Hinblick auf die minimal mögliche Zugkraft (Fₘᵢₙ) für das minimal mögliche Abtriebsmoment Mₘᵢₙ.

Im Begrenzungsblock 4 wird daher ein Soll-Abtriebsmoment M_{ab_soll} ermittelt, das zwischen dem minimal möglichen Abtriebsmoment Mₘᵢₙ und dem maximal möglichen Abtriebsmoment Mₘₐₓ abhängig von der Fahrzeuggeschwindigkeit v liegt. Im Verhältnisbildungsblock 5 wird das Soll-Abtriebsmoment M_{ab_soll} (als Fahrerwunsch) durch die aktuelle, ggf. limitierte Übersetzung i_{akt_lim} geteilt. Ergebnis des Verhältnisbildungsblockes 5 und somit der Recheneinheit 1 ist ein Soll-Motormoment M_{mot_soll}. Das Motorsteuergerät (hier nicht weiter dargestellt) veranlasst in bekannter Weise die Ansteuerung der entsprechenden Aktoren zum Erreichen dieses Soll-Motormoments.

Wesentlich an dem erfindungsgemäßen Ausführungsbeispiel in Fig. 1 ist, dass die elektronische Recheneinheit 1 kein Signal über die Position der Kupplung erhält. Erfindungemäß wird ignoriert, ob die Kupplung geöffnet ist, geschlossen ist, oder schleift.

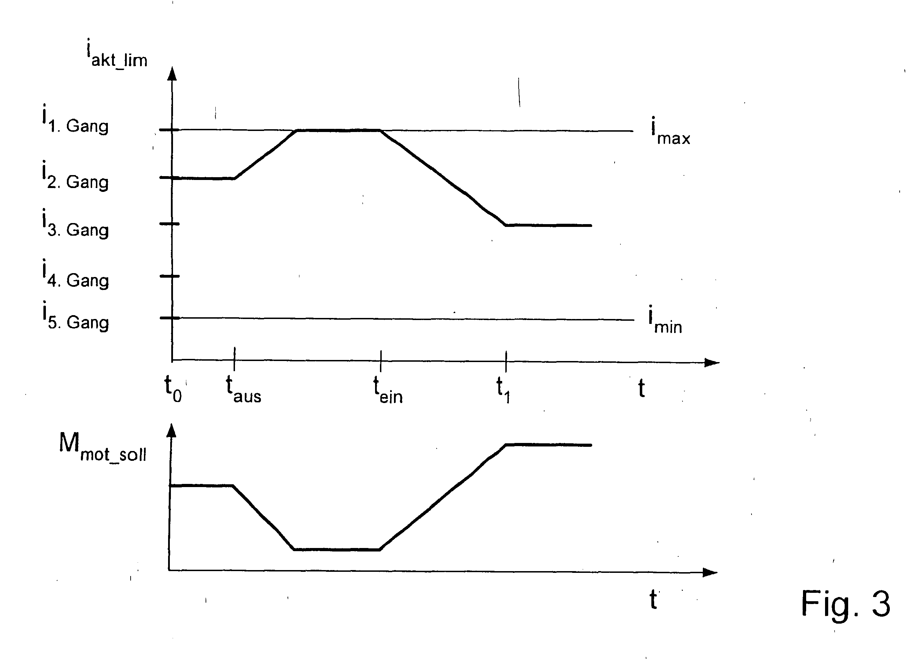

In Fig. 3 wird am Beispiel eines Handschaltgetriebes mit fünf Gängen die Wirkung der Erfindung erläutert. Fig. 3 zeigt die aktuelle, ggf. limitierte Übersetzung i_{akt_lim} über der Zeit t. Als minimal zulässige Übersetzung iₘᵢₙ wird hier die dem 5. Gang zugeordnete Übersetzung i_{5. Gang} vorgegeben. Als maximal zulässige Übersetzung iₘₐₓ wird hier die dem 1. Gang zugeordnete Übersetzung i_{1. Gang} vorgegeben. Zum Zeitpunkt t₀ sei der zweite Gang (i_{2. Gang}) eingelegt bis zum Zeitpunkt tₐᵤₛ die Kupplung geöffnet wird. Die tatsächliche aktuelle Übersetzung i_{akt_lim} erhöht sich somit kontinuierlich und wird bei der erfindungsgemäßen Recheneinheit 1 durch den Begrenzungsblock 3 (Fig. 1) bei Erreichen der maximal zulässigen Übersetzung iₘₐₓ limitiert. Zum Zeitpunkt tₑᵢₙ soll die Kupplung wieder geschlossen werden und es sei der dritte Gang eingelegt. Somit begibt sich die aktuelle, ggf. limitierte Übersetzung i_{akt_lim} kontinuierlich auf die Übersetzung des dritten Ganges i_{3. Gang}. Durch die Erfindung verhält sich das Soll-Motormoment M_{mot_soll} spiegelbildlich zur aktuellen teilweise limitierten Übersetzung i_{akt_lim}. Die Erfindung bewirkt, dass das Motormoment bei geöffneter Kupplung abfällt, um bis zum Erreichen einer niedrigeren Übersetzung langsam wieder anzusteigen. Somit wirkt die Erfindung im Hinblick auf die Steuerung des Motormoments so, wie wenn ein kontinuierlich verstellbares Getriebe vorliegen würde. Das Motormoment verhält sich bei geöffneter Kupplung für den Fahrer durch die Reduzierung der Leistung erwartungsgemäß. Weiterhin wird der Komfort durch kontinuierliche Momentenverläufe erhöht. Im Gegensatz hierzu würde beim Stand der Technik zwischen dem Zeitpunkt tₐᵤₛ und tₑᵢₙ keine Regelung des Motormoments vorgenommen werden. Häufig wird durch Beibehalten des Motormoments im ausgekuppelten Zustand eine für den Fahrer eher unerwartete Drehzahlerhöhung zumindest jedoch eine nicht notwendige Leistungsbeibehaltung erreicht. Dieser Nachteil wird durch das erfindungsgemäße Ausführungsbeispiel verhindert.

## Patentansprüche

1. Elektronische Rechnereinheit zur Bestimmung eines Soll-Motormoments für eine Brennkraftmaschinen-Steuerung in Kraftfahrzeugen mit einer Schnittstelle zur Erfassung von Eingangssignalen, **dadurch gekennzeichnet, dass** die aktuelle Abtriebsdrehzahl (n_{ab}), die aktuelle Motordrehzahl (nₘₒₜ) und ein Fahrerwunschsignal (F) als Eingangssignale erfasst werden, dass unabhängig von der Stellung der Kupplung zwischen Brennkraftmaschine und Getriebe aus der aktuellen Abtriebsdrehzahl (n_{ab}) und der aktuellen Motordrehzahl (nₘₒₜ) eine aktuelle Übersetzung (iₐₖₜ; i_{akt_lim}) ermittelt wird, dass aus dem Fahrerwunschsignal (F) ein Soll-Abtriebsmoment (M_{ab_soll}) ermittelt wird und dass das Soll-Motormoment (M_{mot_soll}) ohne Berücksichtigung der Stellung der Kupplung aus der aktuellen Übersetzung (iₐₖₜ; i_{akt_lim}) und dem Soll-Abtriebsmoment (M_{ab_soll}) berechnet wird.

2. Elektronische Rechnereinheit nach Patentanspruch 1, **dadurch gekennzeichnet, dass** die unabhängig von der Stellung der Kupplung ermittelte aktuelle Übersetzung (iₐₖₜ) durch eine vorgegebene minimal zulässige Übersetzung (iₘᵢₙ) und eine vorgegebene maximal zulässige Übersetzung (iₘₐₓ) in Form einer aktuellen limitierten Übersetzung (i_{akt_lim}) begrenzt sein kann.

3. Elektronische Rechnereinheit nach Patentanspruch 2, **dadurch gekennzeichnet, dass** die minimal zulässige Übersetzung (iₘᵢₙ) durch die mittels des Getriebes einzustellende minimal mögliche Übersetzung vorgegeben wird, und dass die maximal zulässige Übersetzung (iₘₐₓ) durch die mittels des Getriebes einzustellende maximal mögliche Übersetzung vorgegeben wird.

4. Elektronische Rechnereinheit nach einem der Patentansprüche 1 bis 3, **dadurch gekennzeichnet, dass** das aus dem Fahrerwunschsignal (F) ermittelte Soll-Abtriebsmoment (M_{ab_soll}) durch das minimal mögliche Abtriebsmoment (M_{ab_minl}) bzw. das maximal mögliche Abtriebsmoment (M_{ab_max}) begrenzt ist.

## Claims

1. An electronic computer unit for determining a set engine torque for an internal combustion engine control system in motor vehicles, comprising an interface for acquisition of input signals, **characterised in that** input signals in the form of the instantaneous output speed (n_{ab}), the instantaneous engine speed (nₘₒₜ) and a driver's request signal (F) are acquired, an instantaneous transmission ratio (i_{act}; i_{act-_lim}) is determined from the actual output speed (n_{ab}) irrespective of the position of the clutch between the engine and the gear unit, a set output torque (M_{ab_set}) is determined from the driver's request signal (F) and the set engine torque (M_{mot_set}) is calculated from the instantaneous transmission ratio (i_{act}; i_{act_lim}) and the set output torque (M_{ab_set}) irrespective of the position of the clutch.

2. An electronic computer unit according to claim 1, **characterised in that** the instantaneous transmission ratio (i_{act}) determined irrespectively of the position of the clutch can be limited by a set minimum permissible transmission ratio (iₘᵢₙ) and a set maximum permissible transmission ratio (iₘₐₓ), to form an instantaneous limited transmission ratio (i_{act_lim}).

3. An electronic computer unit according to claim 2, **characterised in that** the minimum permissible transmission ratio (iₘᵢₙ) is set by the minimum possible transmission ratio settable by the gear unit and the maximum permissible transmission ratio (iₘₐₓ) is set by the maximum possible transmission ratio settable by the gear unit.

4. An electronic computer unit according to any of claims 1 to 3, **characterised in that** the set output torque (M_{ab_set}) obtained from the driver's request signal (F) is limited by the minimum possible output torque (M_{ab_min}) and/or the maximum permissible output torque (M_{ab_max}).

## Revendications

1. Unité de calcul électronique pour la détermination d'un couple moteur de consigne pour une commande de moteurs à combustion interne dans des véhicules automobiles comprenant une interface pour enregistrer des signaux d'entrée,
**caractérisée en ce que**
le régime de sortie actuel (n_{ab}), le régime moteur actuel (nₘₒₜ) et un signal de souhait du conducteur (F) sont enregistrés en tant que signaux d'entrée, indépendamment de la position de l'embrayage entre le moteur à combustion interne et la boîte de vitesses,
on détermine à partir du régime de sortie actuel (n_{ab}) et du régime moteur actuel (nₘₒₜ) une démultiplication actuelle (iₐₖₜ; i_{akt_lim}),
à partir du signal de souhait du conducteur (F), on détermine un couple de sortie de consigne (Mab_soll), et
on calcule le couple moteur de consigne (M_{mot_soll}) sans prendre en compte la position de l'embrayage, à partir de la démultiplication actuelle (iₐₖₜ ; i_{akt_lim}) et du couple de sortie de consigne (M_{ab_soll}).

2. Unité de calcul électronique selon a revendication 1,
**caractérisée en ce que**
la démultiplication actuelle (iₐₖₜ) déterminée indépendamment de la position de l'embrayage peut être limitée par une démultiplication minimale admissible prédéterminée et une démultiplication maximale admissible prédéterminée (iₘₐₓ) sous la forme d'une démultiplication actuelle limitée (i_{akt_lim}).

3. Unité de calcul électronique selon la revendication 2,
**caractérisée en ce que**
la démultiplication minimale admissible (iₘᵢₙ) est prédéterminée par la démultiplication minimale possible pouvant être réglée au moyen de la boîte de vitesses, et la démultiplication maximale admissible (iₘₐₓ) est prédéterminée par la démultiplication maximale possible pouvant être réglée au moyen de la boîte de vitesses.

4. Unité de calcul électronique selon l'une des revendications 1 à 3,
**caractérisée en ce que**
le couple de sortie de consigne (M_{ab_soll}) déterminé à partir du signal de souhait du conducteur (F) est limité par le couple de sortie minimal possible (M_{ab_min}) ou par le couple de sortie maximal possible (M_{ab_max}).
